# EUROPEAN PATENT APPLICATION

(11) **EP 4 489 210 A1**
(43) Date of publication of application: **08.01.2025**
(21) Application number: 23759824.8
(22) Date of filing: 15.02.2023
(51) Int. Cl.: H01M 50/531, H01M 4/13, H01M 10/052, H01M 10/0587, H01M 50/545

(54) **CYLINDRICAL NON-AQUEOUS ELECTROLYTE SECONDARY BATTERY**

(30) Priority: 28.02.2022 JP 2022029565
(71) Applicant: Panasonic Energy Co., Ltd., Osaka 570-8511 (JP)
(72) Inventor: MURAOKA, Yoshiyuki, Kadoma-shi, Osaka 571-0057 (JP); HONOKI, Kenichi, Kadoma-shi, Osaka 571-0057 (JP); FUKUNAGA, Koichi, Kadoma-shi, Osaka 571-0057 (JP); FUJIMOTO, Masayuki, Kadoma-shi, Osaka 571-0057 (JP); HAMAGUCHI, Yusuke, Kadoma-shi, Osaka 571-0057 (JP)
(74) Representative: Eisenführ Speiser
(86) International application number: PCT/JP2023/005276
(87) International publication number: WO 2023/162823

(57) **Abstract**

In the present invention, in a positive electrode (11), a positive electrode current collector-exposed portion, in which a positive electrode current collector is exposed, has two or more double-sided positive electrode current collector-exposed sections in which a positive electrode current collector is exposed in substantially identical regions on both surfaces in the longitudinal direction of the positive electrode. A negative electrode (12) has at least one double-sided negative electrode current collector-exposed section in which a negative electrode current collector is exposed in substantially identical regions on both surfaces in the longitudinal direction of the negative electrode. The double-sided negative electrode current collector-exposed section faces the double-sided positive electrode current collector-exposed section via a separator (13). The two or more double-sided positive electrode current collector-exposed sections include a lead-fixing exposed portion to which a positive electrode lead (20) is fixed. A negative electrode lead (21) is fixed to the double-sided negative electrode current collector-exposed section. In the positive electrode (11), at least a part of the positive electrode lead (20) is disposed at a point of overlap, in the height direction, with a negative electrode lead-facing position which faces the negative electrode lead (21) via the separator (13).

## Description

### TECHNICAL FIELD

The present disclosure relates to a cylindrical non-aqueous electrolyte secondary battery.

### BACKGROUND ART

Non-aqueous electrolyte secondary batteries, in particular, lithium ion secondary batteries can readily realize high energy density and afford high voltage, and hence, are used for a main power supply for mobile devices such as a mobile communication device and a mobile electronic device. Moreover, the non-aqueous electrolyte secondary batteries are recently being mounted on an automobile and a power storage system, and higher capacity, higher output, and long-term durability thereof are being requested.

Moreover, in connection with the request for high output, it is known that a low resistance in the non-aqueous electrolyte secondary battery can be realized by installing leads at both end portions of a negative electrode in the longitudinal direction. Furthermore, in the situation of advancing higher capacity of the non-aqueous electrolyte secondary battery, it is considered that the structure having a negative electrode lead in a center portion of an electrode assembly hardly enhances the circularity of the electrode assembly due to a tendency for the shape of the electrode assembly to be a distorted shape. Caused by this, it is furthermore considered that high capacity is hardly achieved since the resulting large maximum diameter of the electrode assembly tends to cause the electrode assembly to interfere with a case when the electrode assembly is inserted into the case having certain dimensions.

With such a background, a cylindrical non-aqueous electrolyte secondary battery disclosed in PATENT LITERATURE 1 has a positive electrode lead and a negative electrode lead both installed at places corresponding to positions between 1/3 and 2/3 of a radius of the electrode assembly. By shortening the current collecting paths as above, a low resistance of the battery is realized and the circularity of the electrode assembly is enhanced, and high capacity is realized. Furthermore, this cylindrical non-aqueous electrolyte secondary battery has a double-sided mixture unapplied portion and a single-sided mixture unapplied portion continuously formed at positions corresponding to the positions between 1/3 and 2/3 of the radius of the electrode assembly on the positive electrode. By doing so, a positive electrode side securely becomes the unapplied portion, the positive electrode side facing a negative electrode mixture unapplied portion that is at the place where the negative electrode lead is attached, and precipitation of lithium is thereby prevented.

### CITATION LIST

### PATENT LITERATURE

PATENT LITERATURE 1: US Patent Application Publication No. 2021/023044

### SUMMARY

The cylindrical non-aqueous electrolyte secondary battery disclosed in PATENT LITERATURE 1 has both the positive electrode lead and the negative electrode lead fixed at places corresponding to positions between 1/3 and 2/3 of the radius of the electrode assembly, and hence, may readily realize high capacity and high output. However, with the cylindrical non-aqueous electrolyte secondary battery disclosed in PATENT LITERATURE 1, since the positive electrode mixture single-sided unapplied portion has a dissymmetric shape with respect to the positive electrode current collector, and in rolling, a warpage tends to occur on the positive electrode in the positive electrode longitudinal direction, an insulating tape tends to be pasted in the state where the positive electrode is bent when the insulating tape is pasted on the positive electrode current collector exposed portion, an effect of the insulating tape preventing short circuit is occasionally lowered, and cutting on the positive electrode tends to occur. Furthermore, since the single-sided positive electrode mixture applied portion does not have a positive electrode mixture layer on a single surface, as compared with the double-sided positive electrode mixture applied portion, it is hardly compressed in rolling, and the positive electrode mixture layer is hardly made high density. Therefore, repetition of charge and discharge tends to cause dropping of the active material at the boundary between the double-sided applied portion and the single-sided applied portion, and reliability in long-term use is hardly enhanced. It is therefore an advantage of the present disclosure to provide a cylindrical non-aqueous electrolyte secondary battery that can readily realize high capacity and high output, can restrain a warpage of the electrode, and can readily enhance reliability in long-term use.

In order to solve the aforementioned problem, there is provided a cylindrical non-aqueous electrolyte secondary battery according to the present disclosure, comprising: an electrode assembly having a long strip-shaped positive electrode and a long strip-shaped negative electrode wound via a separator, the positive electrode including a positive electrode current collector and positive electrode mixture layers arranged on both surfaces of the positive electrode current collector, the negative electrode including a negative electrode current collector and negative electrode mixture layers arranged on both surfaces of the negative electrode current collector; a positive electrode lead fixed to the positive electrode current collector and including a protrusion protruding from a first side of the electrode assembly in a height direction; and a negative electrode lead fixed to the negative electrode current collector and including a protrusion protruding from a second side of the electrode assembly in the height direction, wherein the positive electrode has two or more double-sided positive electrode current collector exposed portions in each of which the positive electrode current collector is exposed in substantially equivalent regions in a positive electrode longitudinal direction on both of a positive electrode first surface and a positive electrode second surface, the two or more double-sided positive electrode current collector exposed portions are provided at places spaced from both of a winding starting end and a winding finishing end in the positive electrode longitudinal direction and are arranged to be spaced from each other in the positive electrode longitudinal direction, the two or more double-sided positive electrode current collector exposed portions include a lead fixed exposed portion to which the positive electrode lead is fixed and a lead non-fixed exposed portion to which the positive electrode lead is not fixed, the negative electrode has two or more double-sided negative electrode mixture layer formation portions in each of which the negative electrode mixture layers exist in substantially equivalent regions in a negative electrode longitudinal direction on both of a negative electrode first surface and a negative electrode second surface, and has at least one double-sided negative electrode current collector exposed portion that the negative electrode current collector is exposed in substantially equivalent regions in the negative electrode longitudinal direction on both of the negative electrode first surface and the negative electrode second surface, the double-sided negative electrode current collector exposed portion faces the double-sided positive electrode current collector exposed portion via the separator, the negative electrode lead is fixed to the double-sided negative electrode current collector exposed portion, and at least part of the positive electrode lead is arranged at a place, on the positive electrode, that overlaps in the height direction with a negative electrode lead facing position that faces the negative electrode lead via the separator.

Notably, the requirement for "substantially equivalent" above is satisfied in the case of being equivalent and is also satisfied when, as compared with the case of being equivalent, a difference from the case of being equivalent is smaller than in the case where a difference exists by a dimension of the tolerance (maximum error arising in production). Moreover, it is supposed that the requirement for "substantially equivalent" above is also satisfied when, as compared with the case of being equivalent, the difference from the case of being equivalent is smaller than in the case where a difference exists by a dimension of twice the dimension of the tolerance (maximum error in production). Within such a difference, high capacity and high output may be readily realized, a warpage of the electrode may be restrained, and reliability in long-term use may be enhanced.

According to the cylindrical non-aqueous electrolyte secondary battery according to the present disclosure, high capacity and high output may be readily realized, a warpage of the electrode may be restrained, and reliability in long-term use may be readily enhanced.

### BRIEF DESCRIPTION OF DRAWINGS

FIG. 1 is an axial sectional view of a cylindrical non-aqueous electrolyte secondary battery according to an embodiment of the present disclosure.
FIG. 2 is a perspective view of an electrode assembly of the non-aqueous electrolyte secondary battery.
FIG. 3A is a plan view showing an outer winding surface, a positive electrode lead, and insulating tapes on a positive electrode expanded into a long strip shape.
FIG. 3B is a plan view showing an inner winding surface, the positive electrode lead, and the insulating tapes on the positive electrode expanded into the long strip shape.
FIG. 3C is a plan view showing an outer winding surface, a negative electrode lead, and an insulating tape on a negative electrode expanded into a long strip shape.
FIG. 3D is a plan view showing an inner winding surface, the negative electrode lead, and the insulating tape on the negative electrode expanded into the long strip shape.
FIG. 4A is a plan view showing the outer winding surface, the positive electrode lead, and the insulating tapes on the positive electrode expanded into a long strip shape as to a cylindrical lithium ion secondary battery of Example 2.
FIG. 4B is a plan view showing the inner winding surface, the positive electrode lead, and the insulating tapes on the positive electrode expanded into the long strip shape as to the cylindrical lithium ion secondary battery of Example 2.
FIG. 4C is a plan view showing the outer winding surface, the negative electrode lead, a winding finishing-side negative electrode lead, and the insulating tape on the negative electrode expanded into a long strip shape as to the cylindrical lithium ion secondary battery of Example 2.
FIG. 4D is a plan view showing the inner winding surface, the negative electrode lead, the negative electrode winding finishing-side negative electrode lead, and the insulating tape on the negative electrode expanded into the long strip shape as to the cylindrical lithium ion secondary battery of Example 2.
FIG. 5A is a plan view showing an outer winding surface, a positive electrode lead, and an insulating tape on a positive electrode expanded into a long strip shape as to a cylindrical lithium ion secondary battery of Comparative Example 1.
FIG. 5B is a plan view showing an inner winding surface, the positive electrode lead, and the insulating tape on the positive electrode expanded into the long strip shape as to the cylindrical lithium ion secondary battery of Comparative Example 1.
FIG. 5C is a plan view showing the outer winding surface, the negative electrode lead, and the insulating tape on the negative electrode expanded into a long strip shape as to the cylindrical lithium ion secondary battery of Comparative Example 1.
FIG. 5D is a plan view showing the inner winding surface, the negative electrode lead, and the insulating tape on the negative electrode expanded into the long strip shape as to the cylindrical lithium ion secondary battery of Comparative Example 1.
FIG. 6A is a plan view showing an outer winding surface, a positive electrode lead, and an insulating tape on a positive electrode expanded into a long strip shape as to a cylindrical lithium ion secondary battery of Comparative Example 2.
FIG. 6B is a plan view showing an inner winding surface, the positive electrode lead, and the insulating tape on the positive electrode expanded into the long strip shape as to the cylindrical lithium ion secondary battery of Comparative Example 2.
FIG. 6C is a plan view showing an outer winding surface, a negative electrode lead on the inner winding side, a winding finishing-side negative electrode lead, and an insulating tape on a negative electrode expanded into a long strip shape as to the cylindrical lithium ion secondary battery of Comparative Example 2.
FIG. 6D is a plan view showing an inner winding surface, the negative electrode lead on the inner winding side, the winding finishing-side negative electrode lead, and the insulating tape on the negative electrode expanded into the long strip shape as to the cylindrical lithium ion secondary battery of Comparative Example 2.
FIG. 7A is a plan view showing an outer winding surface, a positive electrode lead, and an insulating tape on a positive electrode expanded into a long strip shape as to a cylindrical lithium ion secondary battery of Comparative Example 3.
FIG. 7B is a plan view showing an inner winding surface, the positive electrode lead, and the insulating tape on the positive electrode expanded into the long strip shape as to the cylindrical lithium ion secondary battery of Comparative Example 3.
FIG. 7C is a plan view showing an outer winding surface, a winding finishing-side negative electrode lead, and an insulating tape on a negative electrode expanded into a long strip shape as to the cylindrical lithium ion secondary battery of Comparative Example 3.
FIG. 7D is a plan view showing an inner winding surface, the winding finishing-side negative electrode lead, and the insulating tape on the negative electrode expanded into the long strip shape as to the cylindrical lithium ion secondary battery of Comparative Example 3.
FIG. 8A is a plan view showing an outer winding surface, three positive electrode leads, and insulating tapes on a positive electrode expanded into a long strip shape as to a cylindrical non-aqueous electrolyte secondary battery of a modification.
FIG. 8B is a plan view showing an inner winding surface, the three positive electrode leads, and insulating tapes on the positive electrode expanded into the long strip shape as to the cylindrical non-aqueous electrolyte secondary battery of the modification.
FIG. 8C is a plan view showing an outer winding surface, three negative electrode leads, and insulating tapes on a negative electrode expanded into a long strip shape as to the cylindrical non-aqueous electrolyte secondary battery of the modification.
FIG. 8D is a plan view showing an inner winding surface, the three negative electrode leads, and the insulating tapes on the negative electrode expanded into the long strip shape as to the cylindrical non-aqueous electrolyte secondary battery of the modification.

### DESCRIPTION OF EMBODIMENTS

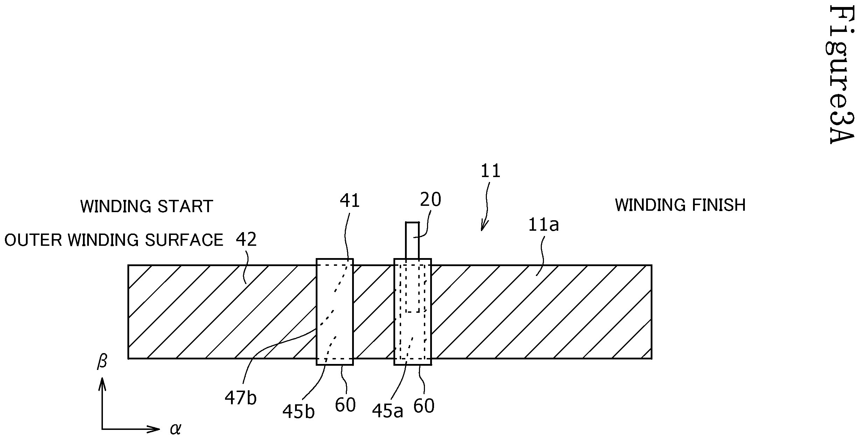

Hereafter, embodiments of a cylindrical non-aqueous electrolyte secondary battery according to the present disclosure will be described in detail with reference to the drawings. It is originally supposed that characteristic portions of the embodiments and the modifications described below are properly combined to construct a new embodiment. Moreover, for the embodiments below, the same configurations are given the same signs in the drawings, and their duplicate description is omitted. Moreover, the drawings are schematic views, and ratios between dimensions such as lengths, widths, and heights of individual members do not necessarily coincide among different drawings. Moreover, in the present specification, a sealing assembly 17 side of a cylindrical non-aqueous electrolyte secondary battery 10 in an axial direction is regarded as being on the "upside", and a bottom 68 side of an exterior can 16 thereof in the axial direction is regarded as being on the "downside". Moreover, in the present specification, when simply mentioning "height direction", the height direction means a height direction of an electrode assembly (wound assembly) 14. Moreover, for each of developments of electrodes (negative electrode, positive electrode) in FIG. 3A to FIG. 8D below, a region indicated by hatching is a mixture layer formation region. Moreover, while in the description below, the technical concept of the present disclosure is described with a case where the cylindrical non-aqueous electrolyte secondary battery is a cylindrical lithium ion secondary battery being as an example, the cylindrical non-aqueous electrolyte secondary battery of the present disclosure is not limited to a cylindrical lithium ion secondary battery. Moreover, among the constituent components described below, constituent components that are not disclosed in the independent claim indicating the highest concept are optional constituent components, not the essential constituent components.

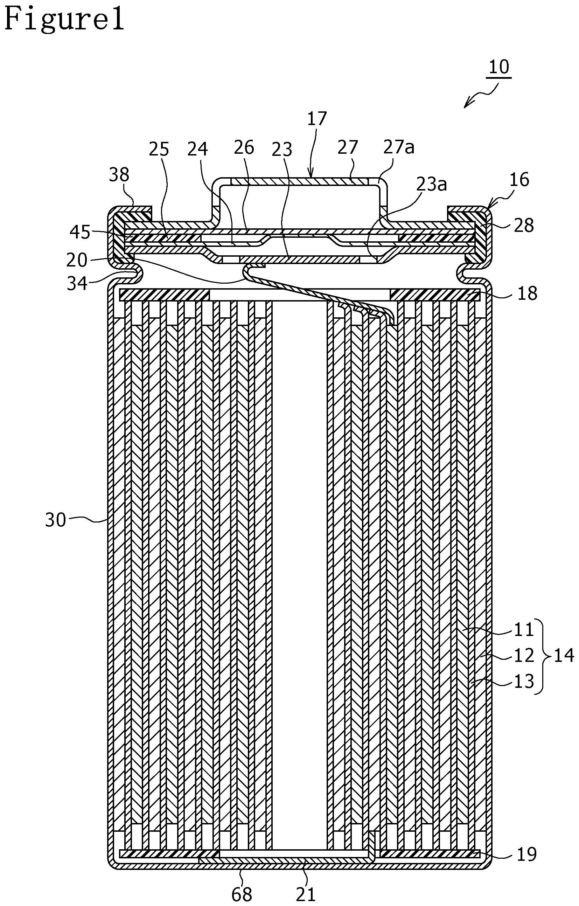

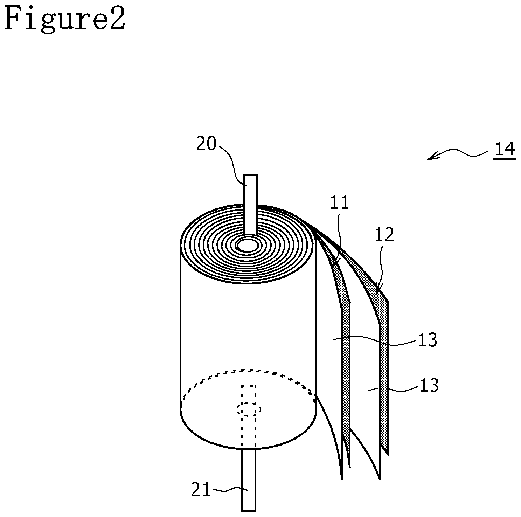

FIG. 1 is an axial sectional view of the cylindrical non-aqueous electrolyte secondary battery 10 according to an embodiment of the present disclosure, and FIG. 2 is a perspective view of the electrode assembly 14 of the cylindrical non-aqueous electrolyte secondary battery 10. As shown in FIG. 1, the cylindrical non-aqueous electrolyte secondary battery (hereinafter simply referred to as battery) 10 comprises the winding-type electrode assembly 14, a non-aqueous electrolyte (not shown), the bottomed tubular metal-made exterior can 16 housing the electrode assembly 14 and the non-aqueous electrolyte, and the sealing assembly 17 closing an opening of the exterior can 16. As shown in FIG. 2, the electrode assembly 14 has a winding structure having a long strip-shaped positive electrode 11 and a long strip-shaped negative electrode 12 wound via two long strip-shaped separators 13.

In order to prevent precipitation of lithium, the negative electrode 12 is formed to have dimensions larger by a certain size than the positive electrode 11. Namely, the negative electrode 12 is formed to be longer than the positive electrode 11 in a longitudinal direction and a width direction (transverse direction). Moreover, the two separators 13 are formed to have dimensions at least larger by a certain size than the positive electrode 11 and, for example, are arranged so as to interpose the positive electrode 11 therebetween. The negative electrode 12 may constitute a winding starting end of the electrode assembly 14. Nevertheless, in general, the separators 13 extend beyond an end of the negative electrode 12 on a winding starting side, and ends of the separators 13 on the winding starting side constitute the winding starting end of the electrode assembly 14.

The non-aqueous electrolyte includes a non-aqueous solvent and an electrolyte salt dissolved in the non-aqueous solvent. For the non-aqueous solvent, for example, there may be used esters, ethers, nitriles, amides, a mixed solvent of two or more of these, and the like. The non-aqueous solvent may contain a halogen-substituted substance having halogen atom(s) such as fluorine substituted for at least part of hydrogen atoms of these solvents. Notably, the non-aqueous electrolyte is not limited to a liquid electrolyte and may be a solid electrolyte using a gelatinous polymer or the like. For the electrolyte salt, a lithium salt such as LiPF₆ is used.

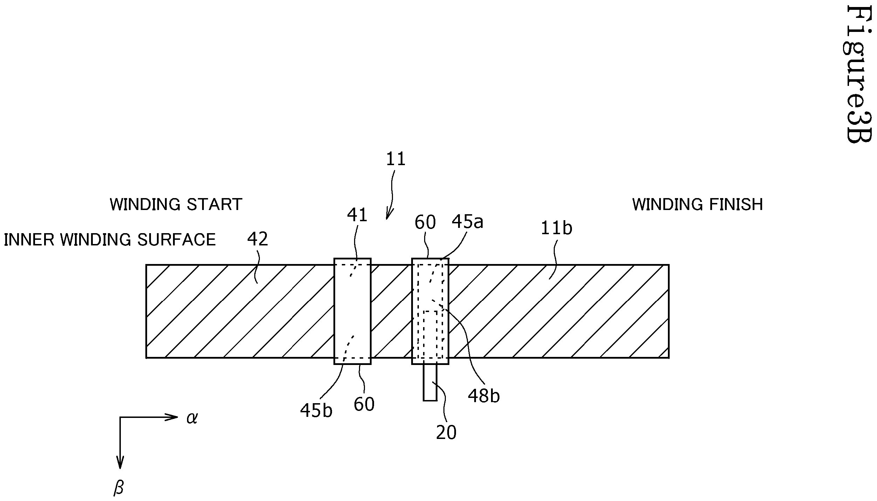

The positive electrode 11 has a positive electrode current collector 41 (refer to FIG. 3A and FIG. 3B) and positive electrode mixture layers 42 (refer to FIG. 3A and FIG. 3B) formed on both surfaces of the positive electrode current collector 41. For the positive electrode current collector 41, there can be used foil of a metal, such as aluminum and aluminum alloy, which is stable in the potential range of the positive electrode 11, a film having the metal disposed in the surface layer, and the like. The positive electrode mixture layers 42 include a positive electrode active material, a conductive agent, and a binder agent. The positive electrode 11 can be produced, for example, by applying positive electrode mixture slurry including the positive electrode active material, the conductive agent, the binder agent, and the like on the positive electrode current collector 41, and drying the coating film and afterward compressing it to form the positive electrode mixture layers 42 on both surfaces of the positive electrode current collector 41.

The positive electrode active material is composed of a lithium-containing metal composite oxide as a main component. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of Ni, Co, Mn, and Al.

Examples of the conductive agent included in the positive electrode mixture layers 42 can include carbon materials such as carbon black, acetylene black, Ketjen black, graphite, and carbon nanotubes. Examples of the binder agent included in the positive electrode mixture layers 42 can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

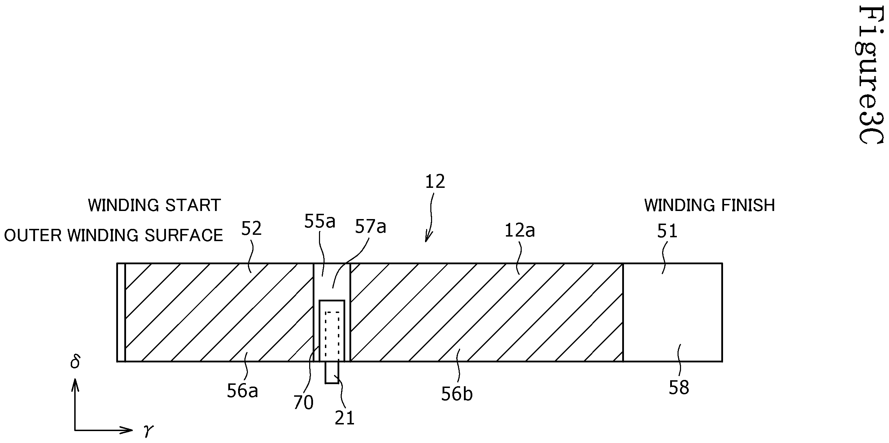

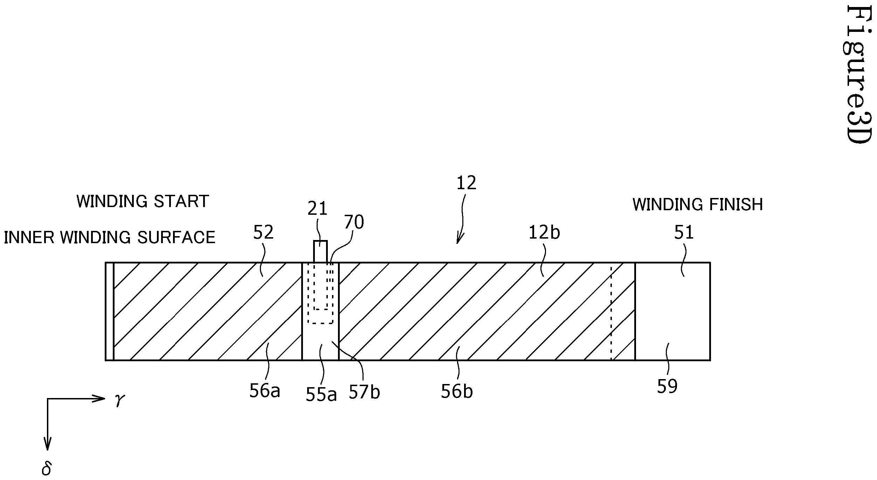

The negative electrode 12 has a negative electrode current collector 51 (refer to FIG. 3C and FIG. 3D) and negative electrode mixture layers 52 (refer to FIG. 3C and FIG. 3D) formed on both surfaces of the negative electrode current collector 51. For the negative electrode current collector 51, there can be used foil of a metal, such as copper and copper alloy, that is stable in the potential range of the negative electrode 12, a film having the metal disposed in the surface layer, and the like. The negative electrode mixture layers 52 include a negative electrode active material and a binder agent. The negative electrode 12 can be produced, for example, by applying negative electrode mixture slurry including the negative electrode active material, the binder agent, and the like on the negative electrode current collector 51, and drying the coating film and afterward compressing it to form the negative electrode mixture layers 52 on both surfaces of the negative electrode current collector 51.

For the negative electrode active material, there is generally used a carbon material that reversibly stores and releases lithium ions. Preferable examples of the carbon material include graphite such as natural graphite such as flaky graphite, massive graphite, and earthy graphite, and artificial graphite such as massive artificial graphite and graphitized mesophase carbon microbeads. The negative electrode mixture layers 52 may include a Si material containing silicon (Si) as the negative electrode active material. Moreover, in this case, the negative electrode mixture layers 52 may include a silicon oxide expressed as SiOₓ (0.5≤x≤1.6). Moreover, for the negative electrode active material, there may be used a metal, other than Si, that is alloyed with lithium, an alloy containing the metal, a compound containing the metal, and the like.

For the binder agent included in the negative electrode mixture layers 52, while fluorine resins, PAN, polyimide resins, acrylic resins, polyolefin resins, and the like may be used as with the case of the positive electrode 11, styrene-butadiene rubber (SBR) or its modified substance is preferably used. The negative electrode mixture layers 52 may include, for example, in addition to SBR or the like, CMC or its salt, polyacrylic acid (PAA) or its salt, polyvinyl alcohol, or the like.

For the separators 13, there are used porous sheets that have ion permeability and insulation ability. Specific examples of the porous sheet include a microporous thin film, woven fabric, nonwoven fabric, and the like. For the material of the separators 13, there are preferably employed polyolefin resins such as polyethylene and polypropylene, cellulose, and the like. The separator 13 may have any of a single layer structure and a stacked structure. A heat resistant layer and/or the like may be formed on a surface of the separator 13.

As shown in FIG. 1, a positive electrode lead 20 is joined to the positive electrode 11, and a negative electrode lead 21 is joined to the negative electrode 12. The battery 10 has an insulating plate 18 on the upside of the electrode assembly 14 and an insulating plate 19 on the downside of the electrode assembly 14. The positive electrode lead 20 extends to the sealing assembly 17 side through a through hole of the insulating plate 18, and the negative electrode lead 21 extends to the bottom 68 side of the exterior can 16 through a through hole of the insulating plate 19. The positive electrode lead 20 is connected to a lower surface of a sealing plate 23 of the sealing assembly 17 by welding or the like. A terminal cap 27 constituting a top plate of the sealing assembly 17 is electrically connected to the sealing plate 23, and the terminal cap 27 works as a positive electrode terminal. Moreover, the negative electrode lead 21 is connected to an inner surface of the bottom 68 of the metal-made exterior can 16 by welding or the like, and the exterior can 16 works as a negative electrode terminal.

In the present embodiment, the positive electrode lead 20 is electrically connected to an intermediate portion such as a center portion of the positive electrode current collector 41 in a winding direction. The negative electrode lead 21 is electrically connected to an intermediate portion such as a center portion of the negative electrode current collector 51 in the winding direction, and an end portion of the negative electrode current collector 51 on a winding finishing side in the winding direction is brought into contact with an inner surface of the exterior can 16. By electrically connecting both the center portion of the negative electrode 12 in the longitudinal direction and the end portion thereof on the winding finishing side to the negative electrode terminal as above, current collecting paths where current flows are shortened and an electric resistance is reduced. Nevertheless, there may be electrically connected to the exterior can a negative electrode lead electrically connected to an intermediate portion such as a center portion of the negative electrode current collector 51 in the longitudinal direction, and in addition, there may be electrically connected to the exterior can a winding finishing-side negative electrode lead electrically connected to an end portion of the negative electrode current collector 51 on the winding finishing side in the longitudinal direction. Otherwise, the outermost peripheral surface of the electrode assembly in the winding direction may be constituted of the separator, and in addition, there may be electrically connected to the exterior can one negative electrode lead electrically connected to an intermediate portion such as a center portion of the negative electrode current collector 51 in the longitudinal direction.

The battery 10 further comprises a resin-made gasket 28 arranged between the exterior can 16 and the sealing assembly 17. The sealing assembly 17 is crimped and fixed to the opening of the exterior can 16 via the gasket 28. Thereby, the inner space of the battery 10 is hermetically sealed. The gasket 28 is pinched and held by the exterior can 16 and the sealing assembly 17 and insulates the sealing assembly 17 from the exterior can 16. The gasket 28 has a role as a sealing material that keeps gastightness inside the battery and a role as an insulating material that insulates the exterior can 16 and the sealing assembly 17 from each other.

The exterior can 16 houses the electrode assembly 14 and the non-aqueous electrolyte and has a shoulder 38, a grooved portion 34, a tubular portion 30, and the bottom 68. The grooved portion 34 can be formed, for example, by performing spinning processing inward in a radial direction on a part of the side wall of the exterior can 16 to recess it into an annular shape inward in the radial direction. The shoulder 38 is formed, when the sealing assembly 17 is crimped and fixed to the exterior can 16, by folding an upper end portion of the exterior can 16 inward toward a peripheral edge 45 of the sealing assembly 17.

The sealing assembly 17 has a structure in which a sealing plate 23, a lower vent member 24, an insulating member 25, an upper vent member 26, and a terminal cap 27 are stacked in the order from the electrode assembly 14 side. Each of the members constituting the sealing assembly 17 has a disc shape or a ring shape, for example, and the members except the insulating member 25 are electrically connected to one another. The sealing plate 23 has at least one through hole 23a. Moreover, the lower vent member 24 and the upper vent member 26 are connected at their center portions, and between their peripheral edges, the insulating member 25 is interposed.

When abnormal heat generation of the battery 10 occurs and an internal pressure of the battery 10 rises, the lower vent member 24 deforms so as to push the upper vent member 26 upward to the terminal cap 27 side and ruptures, and a current path between the lower vent member 24 and the upper vent member 26 is disconnected. When the internal pressure further rises, the upper vent member 26 ruptures, and gas is discharged form a through hole 27a of the terminal cap 27. The discharge of the gas can prevent excessive elevation of the internal pressure of the battery 10 and blowup of the battery 10, which can enhance safety of the battery 10.

FIG. 3A is a plan view showing an outer winding surface 11a, the positive electrode lead 20, and insulating tapes 60 on the positive electrode 11 expanded into a long strip shape, and FIG. 3B is a plan view showing an inner winding surface 11b, the positive electrode lead 20, and insulating tapes 60 on the positive electrode 11 expanded into the long strip shape. Moreover, FIG. 3C is a plan view showing an outer winding surface 12a, the negative electrode lead 21, and an insulating tape 70 on the negative electrode 12 expanded into a long strip shape, and FIG. 3D is a plan view showing an inner winding surface 12b, the negative electrode lead 21, and the insulating tape 70 on the negative electrode 12 expanded into the long strip shape.

The outer winding surface 11a of the positive electrode 11 constitutes a positive electrode first surface, and the inner winding surface 11b of the positive electrode 11 constitutes a positive electrode second surface. Moreover, the outer winding surface 12a of the negative electrode 12 constitutes a negative electrode first surface, and the inner winding surface 12b of the negative electrode 12 constitutes a negative electrode second surface. Moreover, in FIG. 3A and FIG. 3B, an α-direction denotes a positive electrode longitudinal direction with the positive electrode 11 expanded into the long strip shape, and a β-direction denotes a positive electrode width direction with the positive electrode 11 expanded into the long strip shape. Moreover, in FIG. 3C and FIG. 3D, a γ-direction denotes a negative electrode longitudinal direction with the negative electrode 12 expanded into the long strip shape, and a δ-direction denotes a negative electrode width direction with the negative electrode 12 expanded into the long strip shape.

As shown in FIG. 3A and FIG. 3B, the positive electrode 11 only has two double-sided positive electrode current collector exposed portions 45a and 45b each of which the positive electrode current collector 41 is exposed in substantially equivalent regions in the positive electrode longitudinal direction (α-direction shown in FIG. 3A and FIG. 3B) on both of the outer winding surface 11a and the inner winding surface 1 1b, and does not have a portion that the positive electrode current collector is exposed from only on a single surface. The two double-sided positive electrode current collector exposed portions 45a and 45b are provided at places spaced from both of the winding starting end of the positive electrode 11 and the winding finishing end of the positive electrode 11 in the α-direction and are arranged to be spaced from each other in the α-direction. The two double-sided positive electrode current collector exposed portions 45a and 45b have a lead fixed exposed portion 45a to which the positive electrode lead 20 is fixed and a lead non-fixed exposed portion 45b positioned to be spaced from the positive electrode lead 20 in the α-direction.

Each of the two double-sided positive electrode current collector exposed portions 45a and 45b exists in a region that, when the long strip-shaped positive electrode 11 is divided into three regions with the same length in the α-direction, is positioned in the middle one of these. In other words, when, as to the positive electrode 11, coordinates (position) of the winding starting end are defined as zero (reference position) and coordinates (position) of the winding finishing end are defined as one with respect to the α-direction, each of the two double-sided positive electrode current collector exposed portions 45a and 45b exists at a position from 1/3 to 2/3 with respect to the α-direction. Moreover, the positive electrode lead 20 is fixed at a place positioned from 1/3 to 2/3 of the radius of the electrode assembly 14.

The negative electrode 12 has a double-sided negative electrode current collector exposed portion 55a that the negative electrode current collector 51 is exposed in substantially equivalent regions in the negative electrode longitudinal direction (γ-direction shown in FIG. 3C and FIG. 3D) on both of the outer winding surface 12a and the inner winding surface 12b. The double-sided negative electrode current collector exposed portion 55a is provided between two double-sided negative electrode mixture layer formation portions 56a and 56b in the γ-direction that exist in substantially equivalent regions on both of the outer winding surface 12a and the inner winding surface 12b in the γ-direction. The double-sided negative electrode current collector exposed portion 55a faces the double-sided positive electrode current collector exposed portions 45a, 45b via the separator 13.

More in detail, in the present embodiment, the lead non-fixed exposed portion 45b is positioned more on the winding starting side than the lead fixed exposed portion 45a. Further, a lead non-fixed exposed portion 47b on the outer winding side that is positioned on the outer winding side out of the lead non-fixed exposed portion 45b faces a negative electrode current collector exposed portion 57b on the inner winding side that is positioned on the inner winding side out of the double-sided negative electrode current collector exposed portion 55a via the separator 13. Moreover, the positive electrode lead 20 is fixed to a lead fixed exposed portion 48b on the inner winding side that is positioned on the inner winding side out of the lead fixed exposed portion 45a, and the negative electrode lead 21 is fixed to a negative electrode current collector exposed portion 57a on the outer winding side that is positioned on the outer winding side out of the double-sided negative electrode current collector exposed portion 55a. Further, the lead fixed exposed portion 48b on the inner winding side faces the negative electrode current collector exposed portion 57a on the outer winding side via the separator 13.

The positive electrode lead 20 and the negative electrode lead 21 face each other and are positioned to be spaced from each other in the height direction, and the positive electrode lead 20 and the negative electrode lead 21 are fixed at different height positions in the electrode assembly 14. Moreover, the positive electrode lead 20 protrudes to a first side in the height direction (one side in the height direction), and the negative electrode lead 21 protrudes to a second side in the height direction (the other side in the height direction). Therefore, in the present embodiment, the positive electrode lead 20 does not overlap with the negative electrode lead 21 via the separator 13 in the radial direction of the electrode assembly 14. More in detail, in the present embodiment, when a covering margin in the height direction that overlaps with the positive electrode 11 on the positive electrode lead 20 is A [mm], a covering margin in the height direction that overlaps with the negative electrode 12 on the negative electrode lead 21 is B [mm], and a negative electrode width of the negative electrode 12 is C [mm], (A+B)<C is established. Moreover, A<(C/2) and B<(C/2) are preferably established.

At least part of the positive electrode lead 20 is arranged at a place overlapping, in the height direction of the electrode assembly 14, with a negative electrode lead facing position that faces the negative electrode lead 21 via the separator 13 on the positive electrode 11. In other words, at least part of the positive electrode lead 20 and at least part of the negative electrode lead 21 are positioned in the same range of the electrode assembly 14 in the winding direction. This can restrict the range, of the electrode assembly in the winding direction, where the flat plate-like electrode leads 20 and 21 are positioned to a local range, hence, circularity of the electrode assembly 14 can be enhanced, and consequently, capacity of the battery 10 can be enhanced. As with the positive electrode lead 20, the negative electrode lead 21 is fixed at a place positioned from 1/3 to 2/3 of the radius of the electrode assembly 14.

Notably, while there has been described for the present embodiment the case where the positive electrode lead 20 is positioned to be spaced from the negative electrode lead 21 in the height direction, there may be employed a configuration in which at least part of the positive electrode lead overlaps with the negative electrode lead via the separator in the radial direction of the electrode assembly. Moreover, while there has been described the case where the positive electrode lead 20 and the negative electrode lead 21 are fixed at places positioned from 1/3 to 2/3 of the radius of the electrode assembly 14, the positive electrode lead and the negative electrode lead do not need to be fixed at places positioned from 1/3 to 2/3 of the radius of the electrode assembly 14.

As shown in FIG. 3C and FIG. 3D, in the present embodiment, the outer winding surface 12a of the negative electrode 12 has an outermost periphery negative electrode current collector exposed portion 58 that the negative electrode current collector 51 is exposed at an end portion on the winding finishing side in the γ-direction, and the inner winding surface 12b of the negative electrode 12 also has a negative electrode current collector exposed portion 59 that the negative electrode current collector 51 is exposed at an end portion on the winding finishing side in the γ-direction. A length of the outermost periphery negative electrode current collector exposed portion 58 in the γ-direction is larger than a length of the negative electrode current collector exposed portion 59 in the γ-direction. The outermost periphery negative electrode current collector exposed portion 58 includes a portion positioned on the outermost peripheral surface of the electrode assembly 14. The outermost periphery negative electrode current collector exposed portion 58 is in contact with an inner peripheral surface of the exterior can 16 of the battery 10 and is electrically connected to the inner peripheral surface of the exterior can 16. Thereby, the current collecting paths of current are shortened, and an electric resistance of the battery 10 is reduced.

As shown in FIG. 3A and FIG. 3B, on each of the double-sided positive electrode current collector exposed portions 45a and 45b, the insulating tapes 60 are pasted in the state of riding the positive electrode mixture layers 42 positioned on both sides in the α-direction on both the outer winding surface 11a and the inner winding surface 11b. Moreover, as shown in FIG. 3C and FIG. 3D, also on the negative electrode current collector exposed portion 57a on the outer winding side to which the negative electrode lead 21 is fixed, the insulating tape 70 is pasted in the state of at least covering the negative electrode lead. The insulating tape 70 may be pasted further in the state of riding the negative electrode mixture layers 52 positioned on both sides in the γ-direction. Moreover, an insulating tape may be pasted on the negative electrode current collector exposed portion 57b on the inner winding side, or may be pasted so as to cover other borders between the negative electrode mixture layers and the negative electrode current collector exposed portions. The insulating tapes 60 and 70 are provided for the purpose of preventing short circuit and the purpose of preventing dropping of the active materials. While the insulating tape 60, 70 can be formed, for example, of a tape constituted of a polyimide film as a base material and constituted of silicon as a pressure-sensitive adhesive material, it may be formed of any material as long as it is a tape that has insulation ability and can be pasted.

### (Example 1)

### <Production of Positive Electrode>

As a cylindrical lithium ion secondary battery of Example 1, there was obtained a cylindrical lithium ion secondary battery having the expanded shape of the positive electrode shown in FIG. 3A and FIG. 3B and having the expanded shape of the negative electrode shown in FIG. 3C and FIG. 3D. Described more in detail, lithium-nickel-cobalt cobalt composite oxide (LiNi_{0.82}Co_{0.15}Al_{0.03}O₂) particles as the positive electrode active material, acetylene black as the conductive agent, and polyvinylidene fluoride (PVdF) as the binder agent in a mass ratio of 100:1.0:0.9 were input to N-methyl-2-pyrrolidone (NMP) and kneaded to prepare positive electrode slurry.

On a single surface of an aluminum foil-made positive electrode current collector with a thickness of 15 µm, the positive electrode slurry was intermittently applied at predetermined distances so as to form positive electrode current collector exposed portions (positive electrode mixture unapplied portions) with a width of 8 mm, and afterward, dried to remove the solvent (NMP) used for the slurry preparation. Next, the positive electrode slurry was intermittently applied so as to form positive electrode current collector exposed portions (positive electrode mixture unapplied portions) with a width of 8 mm on the reverse surface via the positive electrode current collector, and afterward, dried to remove the solvent (NMP) used for the slurry preparation. In this stage, positions of the unapplied portions on both surfaces of the positive electrode current collector were adjusted to be equivalent. After that, rolling was performed such that thicknesses of the positive electrode mixture applied portions were 0.125 mm by a roll press machine, and cutting was performed into a width of 63 mm and a length of 930 mm to afford the positive electrode.

The obtained positive electrode had two double-sided current collector exposed portions (double-sided positive electrode mixture unapplied portions) at a place from 286 mm to 298 mm in the positive electrode longitudinal direction from the end of the positive electrode on the winding starting side and at a place from 327 mm to 345 mm in the positive electrode longitudinal direction from the end of the positive electrode on the winding starting side. A welding position of the positive electrode lead with a width of 4 mm and a thickness of 0.15 mm in the width direction was a position from 334 mm to 338 mm from the end of the positive electrode on the winding starting side, and was included in the double-sided positive electrode mixture unapplied portions of the positive electrode. A welding position of the positive electrode lead in the positive electrode width direction was a position facing the positive electrode current collector by 30 mm in the positive electrode width direction, and the positive electrode lead was arranged so as to protrude from the positive electrode by 18 mm. The positive electrode lead was welded to the inner winding surface of the positive electrode with ultrasonic waves. A polyimide tape (insulating tape) with a width of 21 mm was pasted on the positive electrode mixture unapplied place including the positive electrode lead welded place so as to cover the positive electrode mixture layer formation regions (positive electrode mixture applied portions) by 1.5 mm on each side.

### <Production of Negative Electrode>

One hundred pts. mass of graphite powder, 1 pt. mass of carboxymethylcellulose (CMC), 1 pt. mass of styrene-butadiene rubber (SBR) as the binder agents, and water were mixed to prepare negative electrode slurry. After the negative electrode slurry was intermittently applied on a single surface of a copper foil-made negative electrode current collector with a thickness of 8 µm such that, via a current collector exposed portion (mixture unapplied portion) with a width of 7 mm and a mixture layer (mixture applied portion), a negative electrode mixture unapplied portion of 88 mm was formed at another position, it was dried to remove the solvent (water) used for the slurry preparation. Next, after, on the reverse surface via the negative electrode current collector, the negative electrode slurry was intermittently applied such that, via a mixture unapplied portion of 7 mm and a mixture applied portion, a negative electrode mixture unapplied portion of 25 mm was formed at another position, it was dried to remove the solvent (water) used for the slurry preparation. In this stage, adjustment was performed such that positions of the negative electrode mixture unapplied portions of 7 mm in the negative electrode longitudinal direction on both surfaces of the negative electrode current collector were equivalent. After that, rolling was performed such that thicknesses of the double-sided negative electrode mixture applied portions were 0.154 mm by a roll press machine, and cutting was performed into a width of 64 mm and a length of 966 mm to afford a negative electrode.

The negative electrode had mixture unapplied portions of 2 mm at the end portion on the winding starting side on both of the front surface and the rear surface, and in addition, had the negative electrode mixture unapplied portions at places from 326 mm to 333 mm in the negative electrode longitudinal direction from the winding starting end of the negative electrode on both surfaces. Furthermore, the negative electrode had the unapplied portion of 86 mm on the outer winding surface at the end portion on the winding finishing side, and had the negative electrode mixture unapplied portion of 23 mm on the inner winding surface at the end portion on the winding finishing side. Next, a negative electrode lead with a width of 4 mm and a thickness of 0.15 mm was installed. A welding position of the negative electrode lead was a position from 327.5 mm to 331.5 mm in the negative electrode longitudinal direction from the winding starting end of the negative electrode, and was included in the double-sided negative electrode mixture unapplied portion of the negative electrode. Meanwhile, a welding position of the negative electrode lead in the negative electrode width direction was a position facing the negative electrode current collector by 30 mm in the negative electrode width direction, and the negative electrode lead was arranged so as to protrude by 12 mm from the negative electrode to the bottom side of the exterior can in the height direction. The negative electrode lead was welded to the outer winding surface of the negative electrode with ultrasonic waves. A polyethylene tape (insulating tape) with a width of 6 mm was pasted on the negative electrode mixture unapplied portion including the negative electrode lead welding place so as to cover the negative electrode lead completely.

### <Preparation of Electrolyte>

To a mixed solvent having ethylene carbonate (EC), dimethyl carbonate (DMC), and ethyl methyl carbonate mixed in a volume ratio of 15:10:75 (conditions of 25°C and 1 atom), vinylene carbonate was mixed in 3 mass%, and LiPF₆ was dissolved therein in a concentration of 1.4 mole/liter to afford a non-aqueous electrolyte.

### <Assembly of Battery>

The positive electrode and the negative electrode were wound via separators composed of polyethylene-made microporous films to produce an electrode assembly. In the electrode assembly, the negative electrode mixture unapplied portions provided in the negative electrode completely faced the insulating tapes pasted on the mixture unapplied portions of the positive electrode via the separator. The lengths of the separators were adjusted such that the outermost periphery of the electrode assembly was constituted of the copper foil of the negative electrode current collector exposed portion over the entire periphery. Polypropylene-made insulating plates were respectively arranged on the upper and lower surfaces of the electrode assembly. After inserting the aforementioned electrode assembly into a bottomed cylindrical exterior can, the negative electrode lead was welded to the bottom surface of the bottomed cylindrical exterior can by ultrasonic welding, the positive electrode lead was welded to a sealing assembly by laser welding, and afterward, the non-aqueous electrolyte was injected into the exterior can. After that, the sealing assembly was crimped and fixed using an insulating gasket to produce a cylindrical lithium ion secondary battery with a diameter of 21 mm, a height of 70 mm, and a designed capacity of 4400 mAh.

### (Example 2)

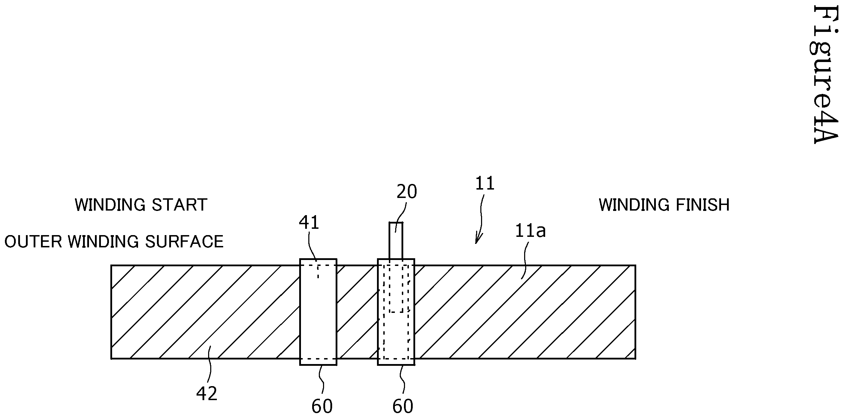

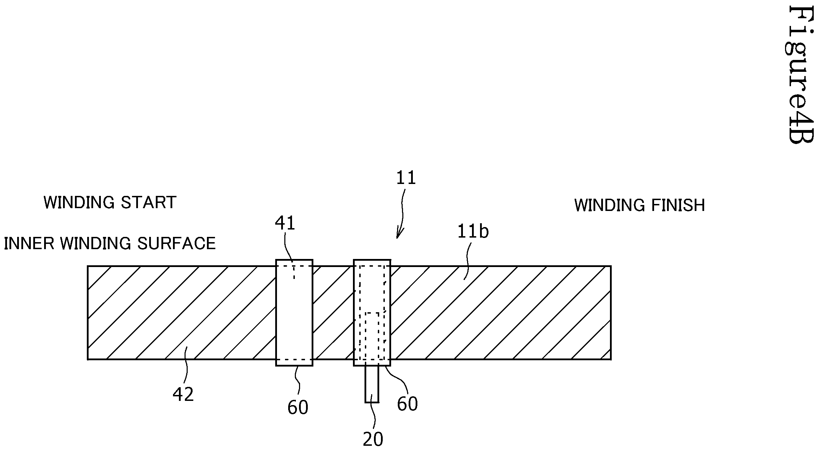

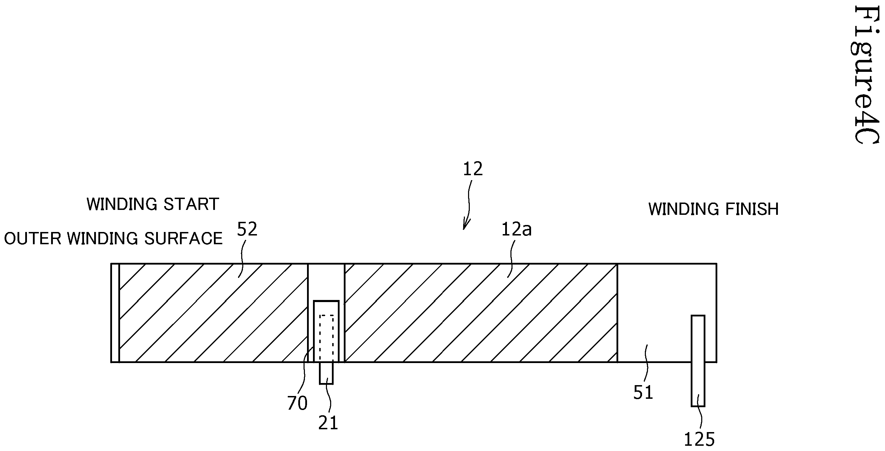

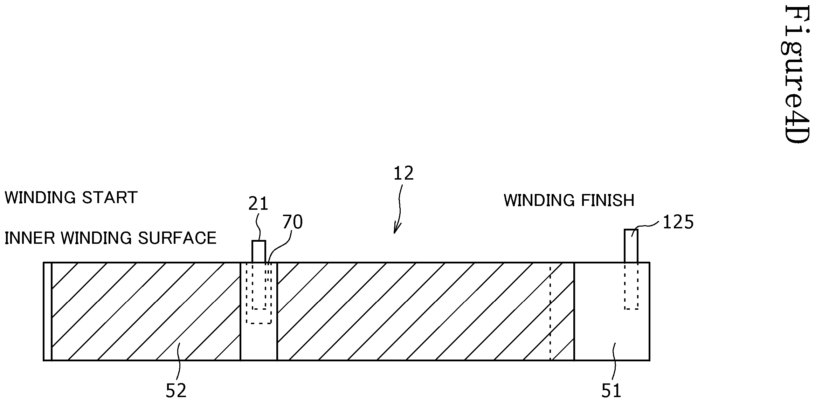

FIG. 4A is a plan view showing the outer winding surface 11a, the positive electrode lead 20, and the insulating tapes 60 on the positive electrode 11 expanded into a long strip shape as to a cylindrical lithium ion secondary battery of Example 2, and FIG. 4B is a plan view showing the inner winding surface 11b, the positive electrode lead 20, and the insulating tapes 60 on the positive electrode 11 expanded into the long strip shape. Moreover, FIG. 4C is a plan view showing the outer winding surface 12a, the negative electrode lead 21, a winding finishing-side negative electrode lead 125, and the insulating tape 70 on the negative electrode 12 expanded into a long strip shape as to the cylindrical lithium ion secondary battery of Example 2, and FIG. 4D is a plan view showing the inner winding surface 12b, the negative electrode lead 21, the winding finishing-side negative electrode lead 125, and a polyethylene tape (insulating tape 70) on the negative electrode 12 expanded into the long strip shape.

As shown in FIG. 4A to FIG. 4D, the cylindrical lithium ion secondary battery of Example 2 was different from the cylindrical lithium ion secondary battery of Example 1 in having the winding finishing-side negative electrode lead 125 with a width of 3 mm and a thickness of 0.15 mm fixed at a position of 959 mm in the negative electrode longitudinal direction from the winding starting end of the negative electrode 12 in addition to the negative electrode lead 21 arranged at a position from 326 mm to 333 mm for the double-sided negative electrode mixture unapplied portion of the negative electrode 12. The other configurations of the cylindrical lithium ion secondary battery of Example 2 were equivalent to the configurations of the cylindrical lithium ion secondary battery of Example 1. Each of the negative electrode lead 21 and the winding finishing-side negative electrode lead 125 faced the negative electrode current collector by 30 mm in the negative electrode width direction. Moreover, each of the negative electrode lead 121 and the winding finishing-side negative electrode lead 125 protruded by 19 mm from the negative electrode 112 to the bottom plate portion side of the exterior can.

### (Comparative Example 1)

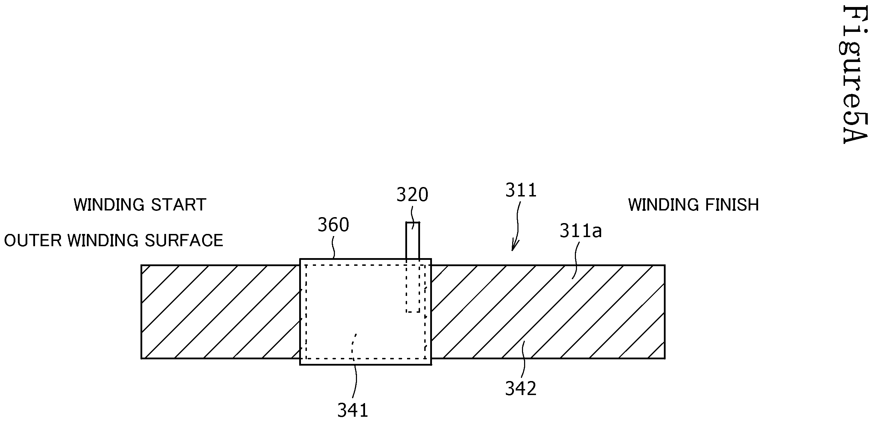

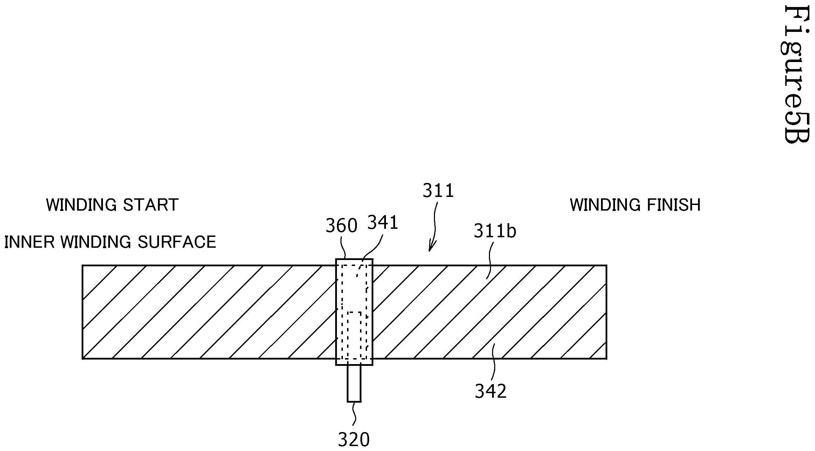

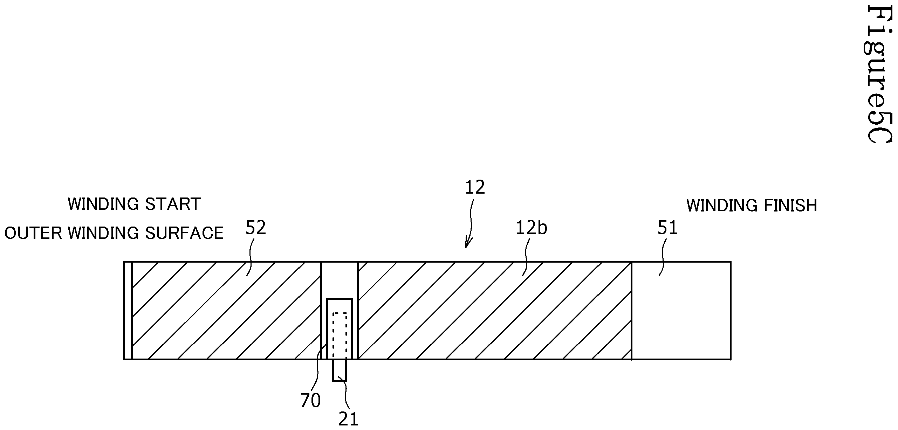

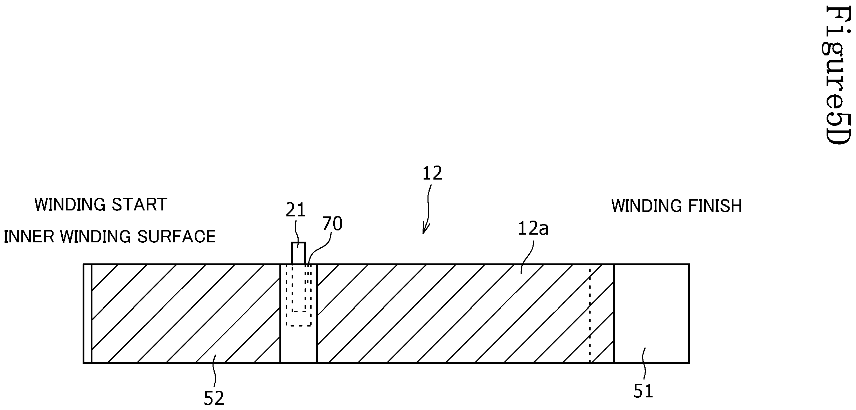

FIG. 5A is a plan view showing an outer winding surface 311a, a positive electrode lead 320, and an insulating tape 360 on a positive electrode 311 expanded into a long strip shape as to a cylindrical lithium ion secondary battery of Comparative Example 1, and FIG. 5B is a plan view showing an inner winding surface 311b, the positive electrode lead 320, and an insulating tape 360 on the positive electrode 311 expanded into the long strip shape. Moreover, FIG. 5C is a plan view showing the outer winding surface 12a, the negative electrode lead 21, and the insulating tape 70 on the negative electrode 12 expanded into a long strip shape as to the cylindrical lithium ion secondary battery of Comparative Example 1, and FIG. 5D is a plan view showing the inner winding surface 12b, the negative electrode lead 21, and the insulating tape 70 on the negative electrode 12 expanded into the long strip shape. As shown in FIG. 5A and FIG. 5B, the positive electrode 311 comprised a positive electrode current collector 341 and positive electrode mixture layers 342.

Referring to FIG. 5A to FIG. 5D, on a single surface of an aluminum foil-made positive electrode current collector with a thickness of 15 µm, the positive electrode slurry was intermittently applied so as to form a positive electrode mixture unapplied portion with a width of 8 mm, and afterward, dried to remove the solvent (NMP) used for the slurry preparation. Next, the positive electrode slurry was intermittently applied so as to form a positive electrode mixture unapplied portion with a width of 26 mm on the reverse surface via the positive electrode current collector, and afterward, dried to remove the solvent (NMP) used for the slurry preparation. After that, rolling was performed such that thicknesses of the positive electrode mixture applied portions were 0.125 mm by a roll press machine, and cutting was performed into a width of 63 mm and a length of 930 mm to afford the positive electrode.

The inner winding surface 311b of the positive electrode 311 had the positive electrode mixture unapplied portion at a place from 327 mm to 345 mm in the positive electrode longitudinal direction from the winding starting end. Meanwhile, the outer winding surface 311a of the positive electrode 311 had the positive electrode mixture unapplied portion at a place from 286 mm to 345 mm in the positive electrode longitudinal direction from the winding starting end. Moreover, a welding position of the positive electrode lead with a width of 4 mm and a thickness of 0.15 mm in the width direction was set to a position from 334 mm to 338 mm in the positive electrode longitudinal direction from the winding starting end, being a position included in the double-sided positive electrode mixture unapplied portion.

A welding position of the positive electrode lead 320 in the positive electrode width direction was a position facing the positive electrode current collector by 30 mm in the positive electrode width direction, and the positive electrode lead 320 was arranged so as to protrude from the positive electrode by 18 mm. The positive electrode lead 320 was welded to the inner winding surface 311b of the positive electrode 311 with ultrasonic waves. A polyimide tape (insulating tape 360) with a width of 21 mm was pasted on the inner winding surface 311b so as to cover the positive electrode mixture applied portions by 1.5 mm on each side. Meanwhile, on the surface arranged on the outer circumference of the electrode assembly, a polyimide tape (insulating tape 360) with a width of 62 mm was pasted on the entire region of the positive electrode mixture unapplied portion so as to cover the positive electrode mixture applied portions by 1.5 mm on each side. The other configurations of the cylindrical lithium ion secondary battery of Comparative Example 1 were made equivalent to the configurations of the cylindrical lithium ion secondary battery of Example 1.

### (Comparative Example 2)

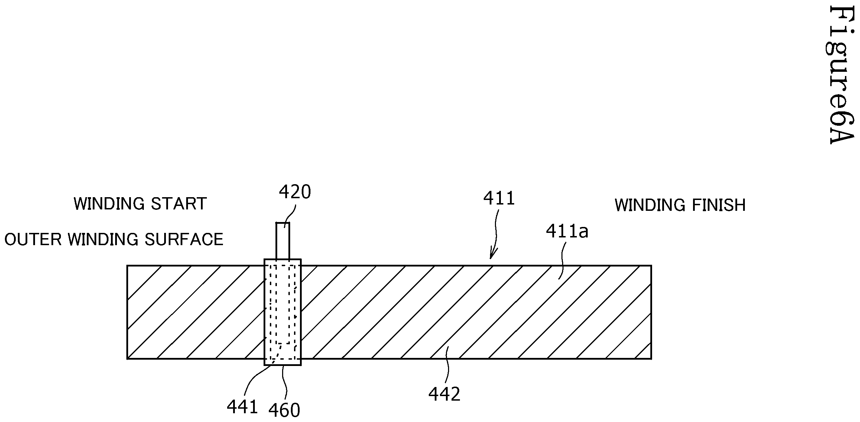

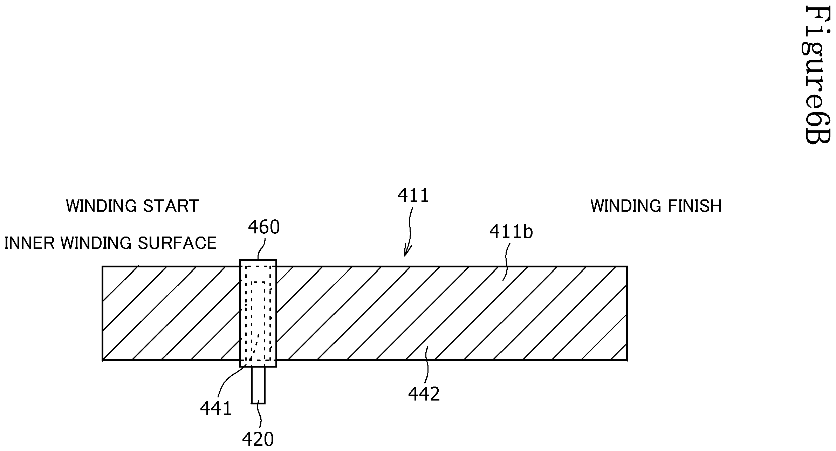

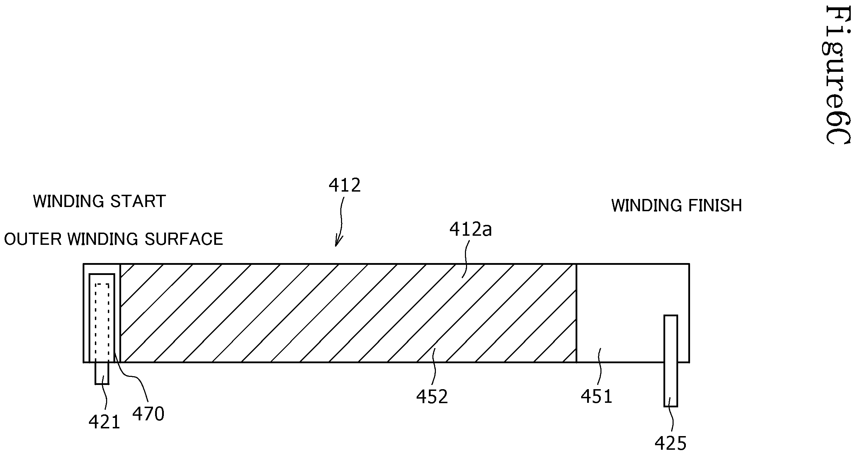

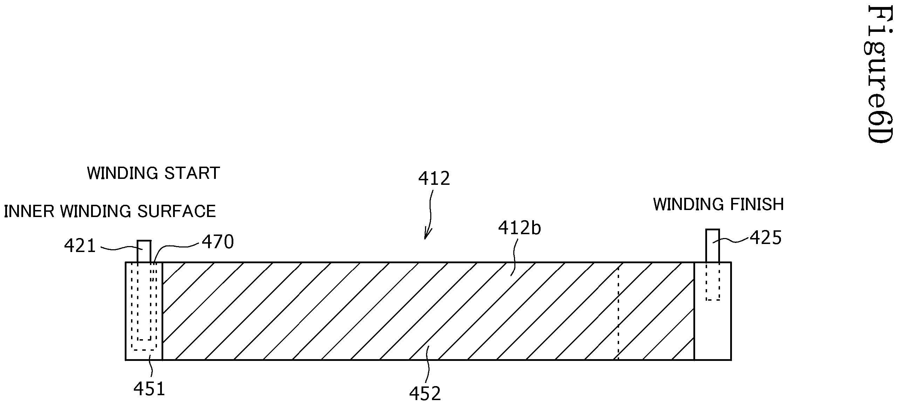

FIG. 6A is a plan view showing an outer winding surface 411a, a positive electrode lead 420, and an insulating tape 460 on a positive electrode 411 expanded into a long strip shape as to a cylindrical lithium ion secondary battery of Comparative Example 2, and FIG. 6B is a plan view showing an inner winding surface 411b, the positive electrode lead 420, and an insulating tape 460 on the positive electrode 411 expanded into the long strip shape. Moreover, FIG. 6C is a plan view showing an outer winding surface 412a, a winding starting-side negative electrode lead 421, a winding finishing-side negative electrode lead 425, and an insulating tape 470 on a negative electrode 412 expanded into a long strip shape as to the cylindrical lithium ion secondary battery of Comparative Example 2, and FIG. 6D is a plan view showing an inner winding surface 412b, the winding starting-side negative electrode lead 421, the winding finishing-side negative electrode lead 425, and the insulating tape 470 on the negative electrode 412 expanded into the long strip shape. As shown in FIG. 6A and FIG. 6B, the positive electrode 411 comprised a positive electrode current collector 441 and positive electrode mixture layers 442. Moreover, as shown in FIG. 6C and FIG. 6D, the negative electrode 412 comprised a negative electrode current collector 451 and negative electrode mixture layers 452.

Referring to FIG. 6A to FIG. 6D, on a single surface of an aluminum foil-made positive electrode current collector with a thickness of 15 µm, the positive electrode slurry was intermittently applied so as to form a positive electrode mixture unapplied portion with a width of 8 mm, and afterward, dried to remove the solvent (NMP) used for the slurry preparation. Next, the positive electrode slurry was intermittently applied so as to form a positive electrode mixture unapplied portion with a width of 26 mm on the reverse surface via the positive electrode current collector, and afterward, dried to remove the solvent (NMP) used for the slurry preparation. After that, rolling was performed such that thicknesses of the positive electrode mixture applied portions were 0.125 mm by a roll press machine, and cutting was performed into a width of 63 mm and a length of 910 mm to afford the positive electrode 411.

Both the outer winding surface 411a and the inner winding surface 411b of the positive electrode 411 had the positive electrode mixture unapplied portions at places from 327 mm to 345 mm in the positive electrode longitudinal direction from the winding starting end. Moreover, a welding position of the positive electrode lead with a width of 4 mm and a thickness of 0.15 mm in the width direction was set to a position from 334 mm to 338 mm in the positive electrode longitudinal direction from the winding starting end, being a position included in the double-sided positive electrode mixture unapplied portion.

A welding position of the positive electrode lead 420 in the positive electrode width direction was a position facing the positive electrode current collector by 60 mm in the positive electrode width direction, and the positive electrode lead 420 was arranged so as to protrude from the positive electrode by 18 mm. The positive electrode lead 420 was welded to the inner winding surface 411b of the positive electrode 411 with ultrasonic waves. A polyimide tape (insulating tape 460) with a width of 21 mm was pasted on the inner winding surface 411b so as to cover the positive electrode mixture applied portions by 1.5 mm on each side.

Referring to FIG. 6A to FIG. 6D, on a single surface of a copper foil-made negative electrode current collector with a thickness of 8 µm, the negative electrode slurry was intermittently applied so as to form a negative electrode mixture unapplied portion of 98 mm, and afterward, dried to remove the solvent (water) used for the slurry preparation. Next, the negative electrode slurry was intermittently applied so as to form a negative electrode mixture unapplied portion of 35 mm on the reverse surface via the negative electrode current collector, and afterward, dried to remove the solvent (water) used for the slurry preparation. After that, rolling was performed such that a thickness of the double-sided negative electrode mixture applied portion was 0.154 mm by a roll press machine, and cutting was performed into a width of 64 mm and a length of 956 mm to produce the negative electrode 412.

The negative electrode 412 had unapplied portions with a length of 12 mm in the negative electrode longitudinal direction at the end portion on the winding starting side on both of the front surface and the rear surface. The negative electrode 412 had an unapplied portion with a length of 86 mm in the negative electrode longitudinal direction on the outer circumferential side at the end portion on the winding finishing side, and had a negative electrode mixture unapplied portion with a length of 23 mm in the negative electrode longitudinal direction on the inner circumferential side at the end portion on the winding finishing side.

The winding starting-side negative electrode lead 421 and the winding finishing-side negative electrode lead 425 were fixed to the negative electrode 412. A welding position of the winding starting-side negative electrode lead 421 in the negative electrode longitudinal direction was a position from 2 mm to 5 mm in the negative electrode longitudinal direction from the winding starting end, being a position included in the double-sided negative electrode mixture unapplied portion. A welding position of the winding starting-side negative electrode lead 421 in the negative electrode width direction was a position facing the negative electrode current collector by 60 mm in the negative electrode width direction, and the winding starting-side negative electrode lead 421 was arranged so as to protrude from the negative electrode 412 by 10 mm. The winding starting-side negative electrode lead 421 was welded to the outer winding surface of the negative electrode 412 with ultrasonic waves. A polyethylene tape (insulating tape 470) with a width of 8 mm was pasted on the negative electrode mixture unapplied portion including the welding place of the winding starting-side negative electrode lead so as to cover the winding starting-side negative electrode lead 421 completely.

A welding position of the winding finishing-side negative electrode lead 425 in the negative electrode longitudinal direction was set to a position from 953 mm to 955 mm in the negative electrode longitudinal direction from the winding starting end. A welding position of the winding finishing-side negative electrode lead 425 in the negative electrode width direction was a position facing the negative electrode current collector by 30 mm in the negative electrode width direction, and the winding finishing-side negative electrode lead 425 was arranged so as to protrude from the negative electrode 412 by 19 mm. The winding starting-side negative electrode lead 421 was welded to the outer winding surface of the negative electrode 412 with ultrasonic waves.

### (Comparative Example 3)

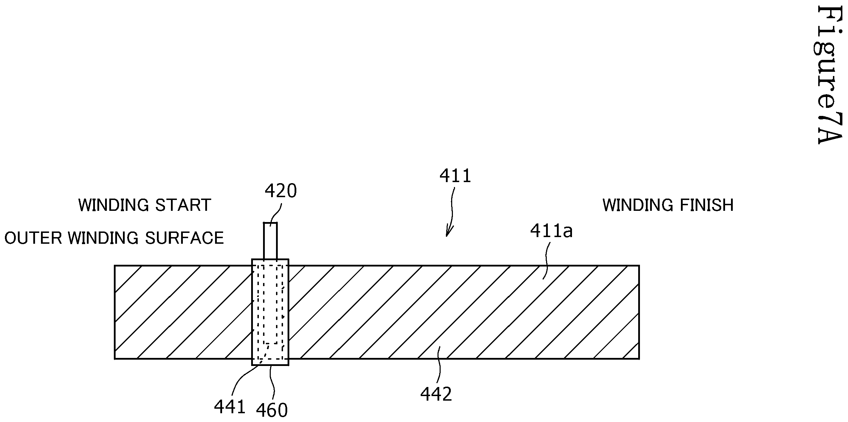

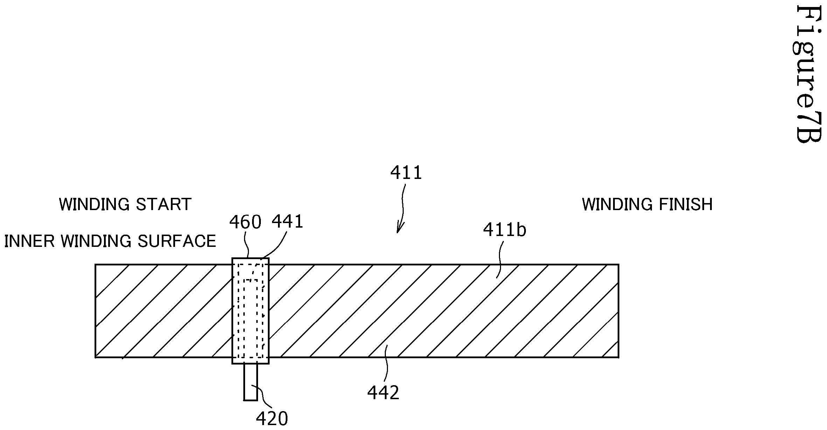

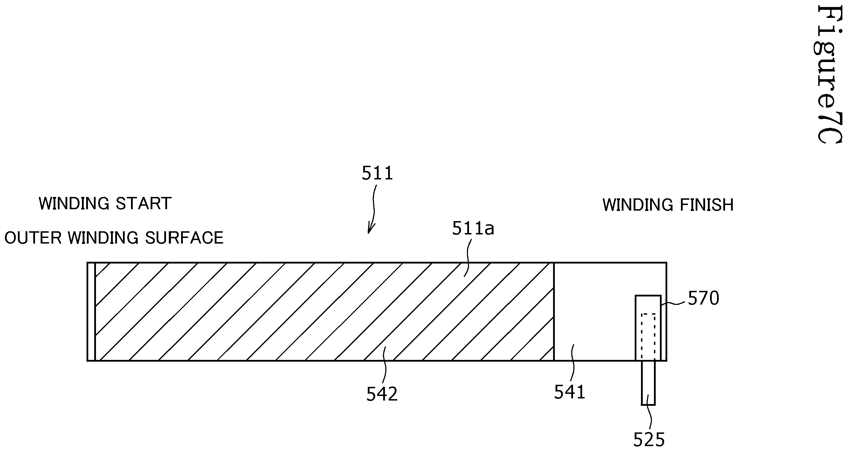

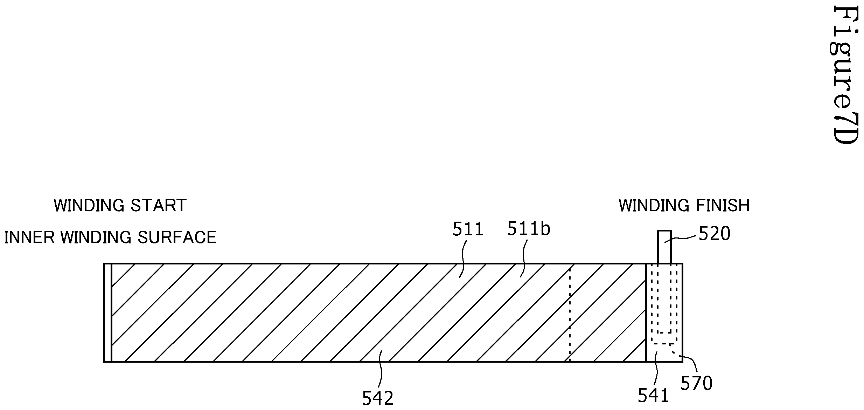

FIG. 7A is a plan view showing the outer winding surface 411a, the positive electrode lead 420, and the insulating tape 460 on the positive electrode 411 expanded to a long strip shape as to a cylindrical lithium ion secondary battery of Comparative Example 3, and FIG. 7B is a plan view showing the inner winding surface 411b, the positive electrode lead 420, and the insulating tape 460 on the positive electrode 411 expanded into the long strip shape. Moreover, FIG. 7C is a plan view showing an outer winding surface 512a, a winding finishing-side negative electrode lead 525, and an insulating tape 570 on a negative electrode 512 expanded into a long strip shape as to the cylindrical lithium ion secondary battery of Comparative Example 3, and FIG. 7D is a plan view showing an inner winding surface 512b, the winding finishing-side negative electrode lead 525, and the insulating tape 570 on the negative electrode 512 expanded into the long strip shape. As shown in FIG. 7C and FIG. 7D, the negative electrode 512 comprises a negative electrode current collector 551 and negative electrode mixture layers 552.

Referring to FIG. 7A to FIG. 7D, on a single surface of a copper foil-made negative electrode current collector with a thickness of 8 µm, the negative electrode slurry was intermittently applied so as to form a negative electrode mixture unapplied portion of 88 mm, and afterward, dried to remove the solvent (water) used for the slurry preparation. Next, the negative electrode slurry was intermittently applied so as to form a negative electrode mixture unapplied portion of 25 mm on the reverse surface via the negative electrode current collector, and afterward, dried to remove the solvent (water) used for the slurry preparation. After that, rolling was performed such that a thickness of the double-sided negative electrode mixture applied portion was 0.154 mm by a roll press machine, and cutting was performed into a width of 64 mm and a length of 946 mm to form the negative electrode 512.

The negative electrode 512 had unapplied portions with a length of 2 mm in the negative electrode longitudinal direction at the end portion on the winding starting side on both of the front surface and the rear surface. Moreover, the negative electrode 512 had an unapplied portion with a length of 86 mm in the negative electrode longitudinal direction on the outer circumferential side at the end portion on the winding finishing side, and had a negative electrode mixture unapplied portion with a length of 23 mm in the negative electrode longitudinal direction on the inner circumferential side at the end portion on the winding finishing side. The winding finishing-side negative electrode lead 525 with a width of 4 mm and a thickness of 0.15 mm was fixed to the negative electrode 512.

A welding position of the winding finishing-side negative electrode lead 525 in the negative electrode longitudinal direction was a position from 938 mm to 942 mm in the negative electrode longitudinal direction from the winding starting end. A welding position of the winding finishing-side negative electrode lead 525 in the negative electrode width direction was a position facing the negative electrode current collector of 30 mm in the negative electrode width direction, and the winding finishing-side negative electrode lead 525 was arranged so as to protrude from the negative electrode 512 by 19 mm. The winding finishing-side negative electrode lead 525 was welded to the outer winding surface of the negative electrode 412. A polyethylene tape (insulating tape 470) with a width of 8 mm was pasted on the negative electrode mixture unapplied portion including the welding place of the winding starting-side negative electrode lead so as to cover the winding finishing-side negative electrode lead 425 completely.

### [Measurement of 1-kHz Impedance]

For each of the cylindrical lithium ion secondary batteries of Examples 1 and 2 and Comparative Examples 1 to 3, an impedance at a frequency of 1 kHz was measured in 25°C environment.

### [Measurement of Circularity of Electrode Assembly]

For each of the cylindrical lithium ion secondary batteries of Examples 1 and 2 and Comparative Examples 1 to 3, circularity was calculated by measuring the maximum diameter and the minimum diameter of the electrode assembly with Vernier calipers.

### [Measurement of Warpage Amount of Positive Electrode]

For each of the cylindrical lithium ion secondary batteries of Examples 1 and 2, places at 5 cm on both sides from the center of the two double-sided mixture unapplied portions provided between places from 1/3 to 2/3 of the positive electrode were fixed, and a warpage amount of both ends in the positive electrode longitudinal direction was measured. For the cylindrical lithium ion secondary battery of Comparative Example 1, the single-sided positive electrode mixture unapplied portion at the place greater than or equal to 1/3 and less than or equal to 2/3 of the positive electrode was put upward, places at 5 cm on both sides from its center were fixed, and a warpage amount of both ends in the positive electrode longitudinal direction was measured. For each of the cylindrical lithium ion secondary batteries of Comparative Examples 2 and 3, a place at 10 cm on the positive electrode in the winding direction was fixed, and a warpage amount of the electrode plate was measured with Vernier calipers.

### [Positive Electrode Mixture Dropping Test]

For each of the cylindrical lithium ion secondary batteries of Examples 1 and 2 and Comparative Example 1, there was employed a measurement value at a place including all the positive electrode mixture unapplied portions, and for each of Comparative Examples 2 and 3, there was employed a measurement value of the double-sided positive electrode mixture applied portion. The positive electrode was cut to have a length of 120 mm so as to include all the positive electrode mixture unapplied portion(s), and under exerting a force of 10 N of tension on the positive electrode with a round rod having a diameter of 6 mm therealong, three rounds of the positive electrode being moved in the direction from the winding start to the winding finish, and then, being moved in the direction from the winding finish to the winding start at a speed of 10 mm/sec were repeated to examine the presence or absence of dropping of the positive electrode mixture.

Table 1 presents the measurement results of the tests.

**[Table 1]**

| | Impedance (1 kHz) | Circularity of Electrode Assembly | Warpage Amount of Positive Electrode | Positive Electrode Mixture |
|---|---|---|---|---|
| Example 1 | 8 mΩ | 98.5 % | 0 mm | No Dropping |
| Example 2 | 8 mΩ | 98.5 % | 0 mm | No Dropping |
| Comparative Example 1 | 8 mΩ | 98.5 % | 2.0 mm | Dropping |
| Comparative Example 2 | 12 mΩ | 97.0 % | No Applicable Place | No Dropping |
| Comparative Example 3 | 20 mΩ | 98.5 % | No Applicable Place | No Dropping |

### [Summary of Measurement Results]

### <Impedance (1 kHz)>

As compared with Comparative Example 3 having the negative electrode lead only at the winding finishing end portion of the negative electrode, Comparative Example 2 having the negative electrode leads respectively arranged at the winding starting end portion and the winding finishing end portion of the negative electrode can reduce a resistance of the current collector of the negative electrode, and it has been able to be confirmed that the impedance of the battery can be reduced by 8 mΩ, from 20 mΩ to 12 mΩ. Meanwhile, as compared with Comparative Example 2 having the two negative electrode leads respectively fixed to the end portion on the winding starting side and the winding finishing end of the negative electrode, in Examples 1 and 2 and Comparative Example 1, the end portion of the negative electrode on the winding finishing side is electrically connected to the exterior can, in addition, the negative electrode lead is fixed between 1/3 and 2/3 of the radius of the electrode assembly, and it has been able to be confirmed that the impedance of the battery can be reduced further by 4 mΩ, from 12 mΩ to 8 mΩ.

It is considered that this is because, as compared with the case where the negative electrode lead is fixed to the end portion of the negative electrode on the winding starting side, when the negative electrode lead is fixed between 1/3 and 2/3 of the radius of the electrode assembly, the current collecting paths on the negative electrode side can be reduced. Notably, it has been able to be confirmed that substantially the equivalent effects of resistance reduction can be obtained both with the configuration of Example 1 having the negative electrode current collector brought into contact with the inner peripheral surface of the exterior can and in the case of Example 2 achieving the electric connection to the exterior can using the winding finishing-side negative electrode lead, as the configuration of electrically connecting the end portion of the negative electrode on the winding finishing side to the exterior can.

### <Circularity of Electrode Assembly>

Examples 1 and 2 and Comparative Examples 1 and 3 have structures not having a negative electrode lead at the end portion on the winding starting side, and the circularity of the electrode assembly is 98.5%. Therefore, it has been able to be confirmed that not fixing a negative electrode lead to the end portion on the winding starting side can make an average diameter of the electrode assembly close to a constant value and can increase the capacity.

### (First Conclusion)

It has been able to be confirmed from the measurement results of the impedance and the circularity of the electrode assembly that Examples 1 and 2 and Comparative Example 1 can make the resistance of the battery low and can also improve the circularity of the electrode assembly. Accordingly, employing the configurations of Examples 1 and 2 and Comparative Example 1 can make the capacity of a non-aqueous electrolyte secondary battery high.

### <Warpage Amount of Positive Electrode>

While Comparative Example 1 has the single-sided positive electrode mixture unapplied portion at the position of the positive electrode between 1/3 and 2/3 of the radius of the electrode assembly and a warpage of 2 mm in the width direction therefore occurs in rolling, each of Examples 1 and 2 does not have a single-sided positive electrode mixture unapplied portion at the same position of the positive electrode, and it has been able to be confirmed that a warpage of the positive electrode therefore does not occur.

### <Positive Electrode Mixture Dropping Test>

The positive electrode plates of Examples 1 and 2 and Comparative Examples 2 and 3 do not have a place having a single-sided positive electrode mixture layer and do not show dropping of the mixture in the positive electrode mixture dropping tests. On the other hand, Comparative Example 1 shows partial dropping of the positive electrode mixture at the boundary portion between the single-sided positive electrode mixture applied portion and the double-sided mixture applied portion. It is therefore considered that Comparative Example 1 has a high risk of the dropping at the boundary between a double-sided applied portion and a single-sided applied portion.

### (Second Conclusion)

It has been able to be confirmed from the measurement results of the warpage amount of the positive electrode and the positive electrode mixture dropping test that, as compared with the battery of Comparative Example 1, the batteries of Examples 1 and 2 can reduce the warpage amount of the positive electrode and can restrain dropping of the positive electrode mixture. Accordingly, as compared with the case of employing the configuration of Comparative Example 1, employing the configurations of Examples 1 and 2 can lead to production of a non-aqueous electrolyte secondary battery that is excellent in long-term reliability.

### [Modifications]

The present disclosure is not limited to the aforementioned embodiment and their modifications, and various improvements and alterations may occur without departing from the scope of the matters disclosed in the claims of the present application and their equivalents. For example, with the aforementioned embodiment, there has been described the case where the battery only has one positive electrode lead 20. Nevertheless, a battery of the present disclosure may comprise two or more positive electrode leads as described next.

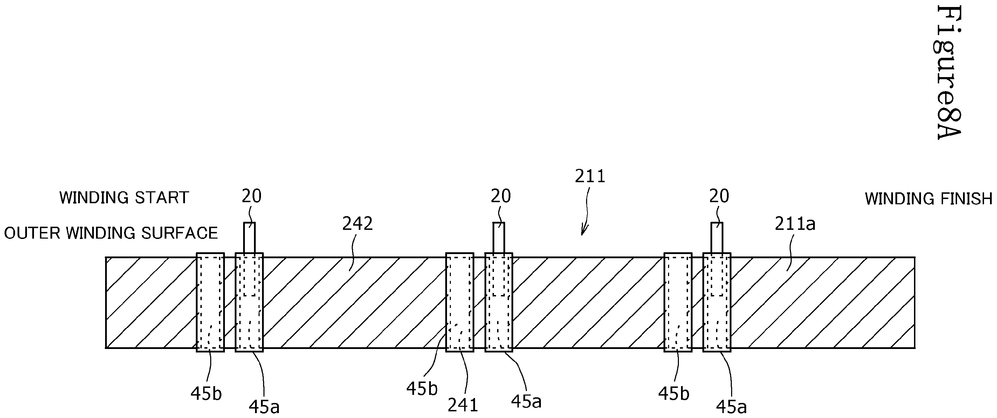

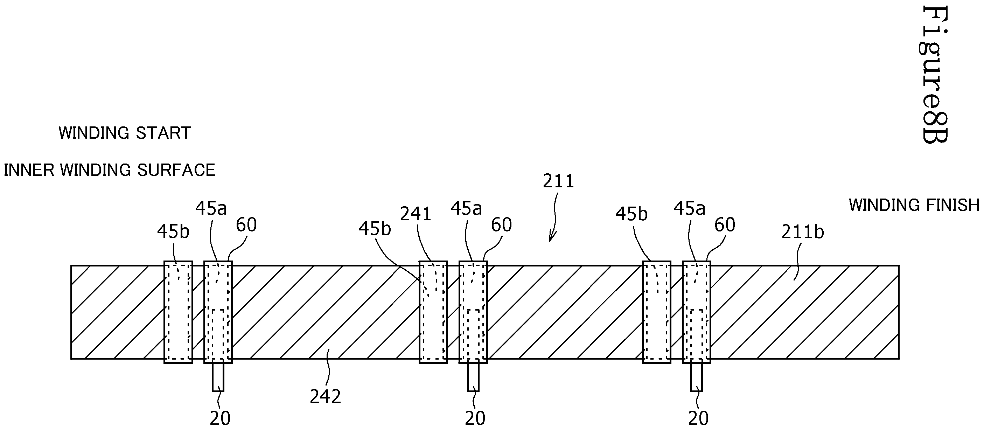

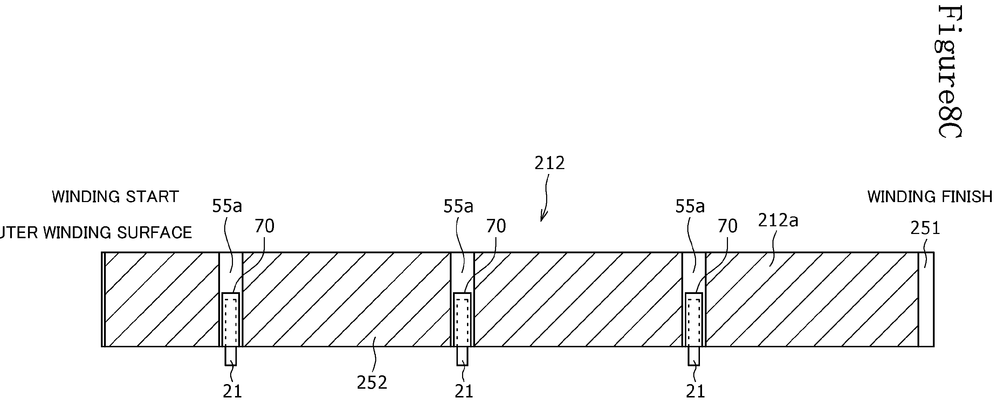

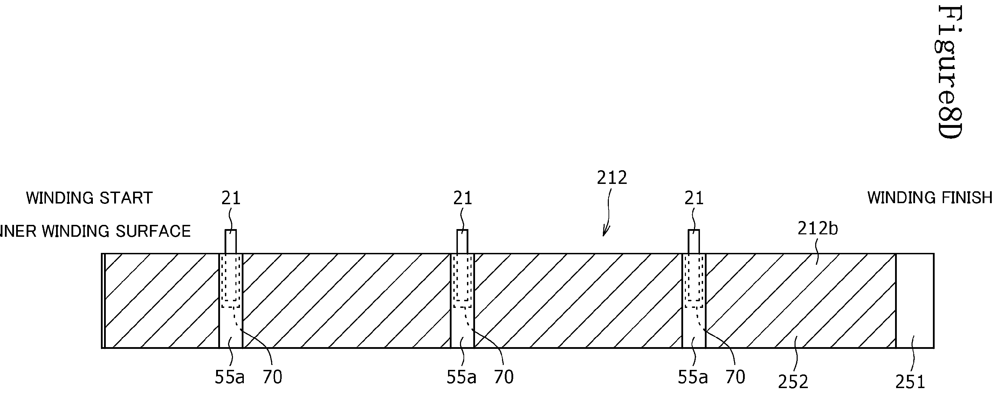

FIG. 8A is a plan view showing an outer winding surface 211a, three positive electrode leads 20, 20, and 20, and the insulating tapes 60 on a positive electrode 211 expanded into a long strip shape as to a cylindrical non-aqueous electrolyte secondary battery of a modification, and FIG. 8B is a plan view showing an inner winding surface 211b, the three positive electrode leads 20, 20, and 20, and the insulating tapes 60 on the positive electrode 211 expanded into the long strip shape. Moreover, FIG. 8C is a plan view showing an outer winding surface 212a, three negative electrode leads 21, 21, and 21, and the insulating tapes 70 on a negative electrode 212 expanded into a long strip shape as to the cylindrical non-aqueous electrolyte secondary battery of the modification, and FIG. 8D is a plan view showing an inner winding surface 212b, the three negative electrode leads 21, 21, and 21, and the insulating tapes 70 on the negative electrode 212 expanded into the long strip shape. As shown in FIG. 8A and FIG. 8B, the positive electrode 211 comprises a positive electrode current collector 241 and positive electrode mixture layers 242. Moreover, as shown in FIG. 8C and FIG. 8D, the negative electrode 212 comprises a negative electrode current collector 251 and negative electrode mixture layer 252.

As shown in FIG. 8A to FIG. 8D, the cylindrical non-aqueous electrolyte secondary battery may have N sets (N is a natural number greater than or equal to two) of the two double-sided positive electrode current collector exposed portions 45a and 45b, the positive electrode lead 20, the double-sided negative electrode current collector exposed portion 55a, and the negative electrode lead 21 that have the relative positional relation having been described in detail using FIG. 3A to FIG. 3D, the sets being spaced from one another in the winding direction of the electrode assembly, and, for example, may have three sets of those as shown in FIG. 8A to FIG. 8D. This can shorten the current collecting paths on the positive electrode 211 and the negative electrode 212, and hence, can largely reduce the resistance of the cylindrical non-aqueous electrolyte secondary battery.

Moreover, while in the description above, each current collector exposed portion is formed from one end to the other end of the electrode in the width direction in a belt-shaped region, the electrode assembly may include one or more current collector exposed portions in each of which the current collector is not exposed in the entirety of the long strip-shaped electrode in the width direction.

### REFERENCE SIGNS LIST

Battery, 11, 111, 211 Positive electrode, 11a, 211a Outer winding surface, 11b, 211b Inner winding surface, 12, 112, 212 Negative electrode, 12a, 212a Outer winding surface, 12b, 212b Inner winding surface, 13 Separator, 14 Electrode assembly, 16 Exterior can, 17 Sealing assembly, 20, 320 Positive electrode lead, 21, 121 Negative electrode lead, 41, 241 Positive electrode current collector, 42, 242 Positive electrode mixture layer, 45a Lead fixed exposed portion, 45b Lead non-fixed exposed portion, 47b Lead non-fixed exposed portion on the outer winding side, 48b Lead fixed exposed portion on the inner winding side, 51, 251 Negative electrode current collector, 52, 252 Negative electrode mixture layer, 55a Double-sided negative electrode current collector exposed portion, 56a Double-sided negative electrode mixture layer formation portion, 57a Negative electrode current collector exposed portion on the outer winding side, 57b Negative electrode current collector exposed portion on the inner winding side, 58 Outermost periphery negative electrode current collector exposed portion, 59 Negative electrode current collector exposed portion, 125 Winding finishing-side negative electrode lead

## Claims

1. A cylindrical non-aqueous electrolyte secondary battery, comprising:
an electrode assembly having a long strip-shaped positive electrode and a long strip-shaped negative electrode wound via a separator, the positive electrode including a positive electrode current collector and positive electrode mixture layers arranged on both surfaces of the positive electrode current collector, the negative electrode including a negative electrode current collector and negative electrode mixture layers arranged on both surfaces of the negative electrode current collector;
a positive electrode lead fixed to the positive electrode current collector and including a protrusion protruding from a first side of the electrode assembly in a height direction; and
a negative electrode lead fixed to the negative electrode current collector and including a protrusion protruding from a second side of the electrode assembly in the height direction, wherein
the positive electrode has two or more double-sided positive electrode current collector exposed portions in each of which the positive electrode current collector is exposed in substantially equivalent regions in a positive electrode longitudinal direction on both of a positive electrode first surface and a positive electrode second surface,
the two or more double-sided positive electrode current collector exposed portions are provided at places spaced from both of a winding starting end and a winding finishing end in the positive electrode longitudinal direction and are arranged to be spaced from each other in the positive electrode longitudinal direction,
the two or more double-sided positive electrode current collector exposed portions include a lead fixed exposed portion to which the positive electrode lead is fixed and a lead non-fixed exposed portion to which the positive electrode lead is not fixed,
the negative electrode has two or more double-sided negative electrode mixture layer formation portions in each of which the negative electrode mixture layers exist in substantially equivalent regions in a negative electrode longitudinal direction on both of a negative electrode first surface and a negative electrode second surface, and has at least one double-sided negative electrode current collector exposed portion from which the negative electrode current collector is exposed in substantially equivalent regions in the negative electrode longitudinal direction on both of the negative electrode first surface and the negative electrode second surface,
the double-sided negative electrode current collector exposed portion faces the double-sided positive electrode current collector exposed portion via the separator,
the negative electrode lead is fixed to the double-sided negative electrode current collector exposed portion, and
at least part of the positive electrode lead is arranged at a place, on the positive electrode, that overlaps in the height direction with a negative electrode lead facing position that faces the negative electrode lead via the separator.

2. The cylindrical non-aqueous electrolyte secondary battery according to claim 1, wherein the positive electrode lead is positioned to be spaced from the negative electrode lead in the height direction.

3. The cylindrical non-aqueous electrolyte secondary battery according to claim 1 or 2, wherein
the positive electrode only has the two double-sided positive electrode current collector exposed portions, and
the cylindrical non-aqueous electrolyte secondary battery only has the positive electrode lead that is fixed at a place positioned from 1/3 to 2/3 of a radius of the electrode assembly, and only has the negative electrode lead that is fixed at a place positioned from 1/3 to 2/3 of the radius of the electrode assembly.

4. The cylindrical non-aqueous electrolyte secondary battery according to any one of claims 1 to 3, wherein, when a covering margin in the height direction that overlaps with the positive electrode on the positive electrode lead is A [mm], a covering margin in the height direction that overlaps with the negative electrode on the negative electrode lead is B [mm], and a negative electrode width of the negative electrode is C [mm], (A+B)<C is established.

5. The cylindrical non-aqueous electrolyte secondary battery according to claim 4, wherein, when the covering margin in the height direction that overlaps with the positive electrode on the positive electrode lead is A [mm], the covering margin in the height direction that overlaps with the negative electrode on the negative electrode lead is B [mm], and the negative electrode width of the negative electrode is C [mm], A<(C/2) is established and B<(C/2) is established.

6. The cylindrical non-aqueous electrolyte secondary battery according to any one of claims 1 to 5, wherein
an outermost peripheral surface of the electrode assembly has an outermost periphery negative electrode current collector exposed portion from which the negative electrode current collector is exposed, and
at least part of the outermost periphery negative electrode current collector exposed portion is in contact with an inner peripheral surface of an exterior can that houses the electrode assembly.

7. The cylindrical non-aqueous electrolyte secondary battery according to any one of claims 1 to 5, wherein
the negative electrode has a winding finishing-side negative electrode current collector exposed portion from which the negative electrode current collector is exposed at an end portion on the winding finishing side,
the cylindrical non-aqueous electrolyte secondary battery comprises a winding finishing-side negative electrode lead that electrically connects the winding finishing-side negative electrode current collector exposed portion and an exterior can that houses the electrode assembly.
